# EUROPÄISCHE PATENTSCHRIFT

(11) **EP 0 902 040 B1**
(45) Veröffentlichungstag und Bekanntmachung des Hinweises auf die Patenterteilung: **03.08.2005**
(21) Anmeldenummer: 98117140.8
(22) Anmeldetag: 10.09.1998
(51) Int. Cl.: C08G 18/67, C08F 283/00, C09D 175/16

(54) **Strahlungshärtbare Zubereitungen auf der Basis aliphatischer, Urethangruppen enthaltender Prepolymere mit ethylenisch ungesättigten Doppelbindungen**
Radiation curable compositions from urethane groups containing aliphatic prepolymers having ethylenically unsaturated double bonds
Compositions durcissables par rayonnement à base de prépolymères aliphatiques contenant des groupes uréthanes ayant des double liaisons à insaturation éthylénique

(30) Priorität: 11.09.1997 DE 19739970
(43) Veröffentlichungstag der Anmeldung: 17.03.1999
(73) Patentinhaber: BASF AKTIENGESELLSCHAFT, 67056 Ludwigshafen (DE)
(72) Erfinder: Schwalm, Reinhold, Dr., 67157 Wachenheim (DE); Völlinger, Frank, 67480 Edenkoben (DE); Beck, Erich, Dr., 68526 Ladenburg (DE); Menzel, Klaus, 67069 Ludwigshafen (DE)
(74) Vertreter: Kinzebach, Werner, Dr.

(56) Entgegenhaltungen:
- EP-A- 0 457 499
- EP-A- 0 658 582
- US-A- 4 072 770
- US-A- 5 475 038
- DATABASE WPI Section Ch, Week 9327 Derwent Publications Ltd., London, GB; Class A14, AN 93-216860 XP002085056 & JP 05 140254 A (DAINIPPON INK & CHEM KK) , 8. Juni 1993

## Beschreibung

Die vorliegende Erfindung betrifft strahlungshärtbare Zubereitungen, die wenigstens ein aliphatisches, Urethangruppen enthaltendes Prepolymer mit wenigstens zwei ethylenisch ungesättigten Doppelbindungen und wenigstens einen monofunktionellen Ester einer α,β-ethylenisch ungesättigten Carbonsäure mit einem monofunktionellen Alkanol enthalten, der ausgewählt ist unter Trimethylolpro-panmonoformalacrylat, Glycerinmonoformalacrylat, Cyclohexylmethacrylat, 4-Tetrahydropyranylacrylat, 2-Tetrahydropyranylmethacrylat und Tetrahydrofurfurylacrylat.

Strahlungshärtbare Zusammensetzungen haben in der Technik eine breite Anwendung, insbesondere als hochwertige Beschichtungsmaterialien für Oberflächen erlangt. Unter strahlungshärtbaren Zusammensetzungen versteht man Zubereitungen, die ethylenisch ungesättigte Polymere oder Prepolymere enthalten, und die, gegebenenfalls nach einem physikalischen Trocknungsschritt, durch Einwirkung energiereicher Strahlung, beispielsweise durch Bestrahlung mit UV-Licht oder durch Bestrahlung mit energiereichen Elektronen (Elektronenstrahlung) ausgehärtet werden.

Besonders hochwertige Beschichtungen erhält man, wenn man als strahlungshärtbare Zusammensetzung Zubereitungen einsetzt, die ein ethylenisch ungesättigtes, Urethangruppen enthaltendes Polymer oder Prepolymer enthalten. Ethylenisch ungesättigte, Urethangruppen enthaltende Polymere und Prepolymere sind beispielsweise aus P. K. T. Oldring (Hrsg.), Chemistry and Technology of UV- and EB-Formulations for Coatings, Inks and Paints, Vol. II, SITA Technology, London 1991, S. 73-123 bekannt. Aufgrund der hohen Viskosität ethylenisch ungesättigter, Urethangruppen enthaltender Polymere und Prepolymere werden derartigen Zusammensetzungen oftmals niedermolekulare, ethylenisch ungesättigte Verbindungen zur Viskositätserniedrigung zugesetzt. Letztere polymerisieren ebenso wie die ethylenisch ungesättigten Polymere und Prepolymere beim Härten aus und werden so in die Beschichtung eingebaut. Man bezeichnet sie daher als Reaktivverdünner. Die Eigenschaften der erhaltenen Beschichtungen werden somit sowohl durch das eingesetzte ethylenisch ungesättigte Polymer bzw. Prepolymer als auch durch den Reaktivverdünner bestimmt. Für optimale Beschichtungseigenschaften ist zudem eine Abstimmung der ethylenisch ungesättigten Polymere bzw. Prepolymere auf die Reaktivverdünner erforderlich.

Aus der DE-A-27 260 41 sind strahlungshärtbare Zusammensetzungen bekannt, die wenigstens ein Polyetherurethan, das an den Enden mit Acrylat- bzw. Methacrylatgruppen modifiziert ist, und ein niedermolekulares polyfunktionelles Acrylat mit Ethergruppen und Hydroxyalkylacrylate enthalten. Derartige strahlungshärtbare Zusammensetzungen führen zu Beschichtungen mit erhöhter Flexibilität.

Die EP-A-508 409 offenbart strahlungshärtbare Zusammensetzungen, die wenigstens ein ethylenisch ungesättigtes Polyesterurethan und wenigstens eine nicht-aromatische, niedermolekulare Substanz mit wenigstens einer, vorzugsweise wenigstens zwei (Meth)acryloylgruppen als Vernetzer (= Reaktivverdünner) enthalten. Derartige strahlungshärtbare Zusammensetzungen führen zu Beschichtungen mit verbesserter Witterungsstabilität.

Grundsätzlich stellt sich bei den strahlungshärtbaren Zusammensetzungen des Standes der Technik das Problem, dass durch Auswahl und Abstimmung der Komponenten (Prepolymer und Reaktivverdünner) einzelne Anwendungseigenschaften wie Beschichtungshärte, Flexibilität und Witterungsbeständigkeit verbessert werden können, dies jedoch immer zu Lasten anderer Anwendungseigenschaften geht. Der vorliegenden Erfindung liegt daher die Aufgabe zu Grunde, strahlungshärtbare Zusammensetzungen bereitzustellen, die zu Beschichtungen mit ausgewogenen Eigenschaftsprofilen mit großer Härte, hoher Flexibilität und hoher Witterungsbeständigkeit führen und die gleichzeitig eine geringe Verarbeitungsviskosität und eine hohe Aushärtungsgeschwindigkeit aufweisen.

Diese Aufgabe konnte überraschenderweise gelöst werden durch eine strahlungshärtbare Zusammensetzung, die wenigstens ein aliphatisches, Urethangruppen enthaltendes Prepolymer und wenigstens einen monofunktionellen Ester einer α,β-ethylenisch ungesättigten Carbonsäure mit einem monofunktionellen Alkanol, der ausgewählt ist unter Trimethylolpropanmonoformalacrylat, Glycerinmonoformalacrylat, Cyclohexylmethacrylat, 4-Tetrahydropyranylacrylat, 2-Tetrahydropyranylmethacrylat und Tetrahydrofurfurylacrylat, enthält.

Die vorliegende Erfindung betrifft somit strahlungshärtbare Zubereitungen, die
i) wenigstens ein aliphatisches, Urethangruppen enthaltendes Prepolymer, das im Mittel wenigstens zwei ethylenisch ungesättigte Doppelbindungen pro Molekül aufweist (= Komponente A),
ii) wenigstens einen monofunktionellen Ester einer α,β-ethylenisch ungesättigten Carbonsäure mit einem monofunktionellen Alkanol, der ausgewählt ist unter Trimethylolpropanmonoformalacrylat, Glycerinmonoformalacrylat, Cyclohexylmethacrylat, 4-Tetrahydropyranylacrylat, 2-Tetrahydropyranylmethacrylat und Tetrahydrofurfurylacrylat (= Komponente B),
iii) gegebenenfalls di- oder polyfunktionellen Ester einer α,β-ethylenisch ungesättigten Carbonsäure mit einem aliphatischen Di- oder Polyol (= Komponente C), enthalten.

Erfindungsgemäß ist das aliphatische, Urethangruppen enthaltende Prepolymer frei von aromatischen Strukturelementen wie Phenylen oder Naphthylen oder substituierten Derivaten davon. Komponente B enthält keine Stickstoffatome.

In der Regel enthalten die erfindungsgemäßen Zusammensetzungen 20 bis 90 Gew.-%, bevorzugt 30 bis 80 Gew.-% und insbesondere 40 bis 70 Gew.-% der Komponente A, 10 bis 80 Gew.-%, vorzugsweise 20 bis 60 Gew.-% und insbesondere 30 bis 50 Gew.-% der Komponente B, 0 bis 40 Gew.-% und bevorzugt 0 bis 30 Gew.-% der Komponente C und 0 bis 20 Gew.-%, bezogen auf das Gesamtgewicht der Komponenten A, B und C, übliche Hilfsmittel, mit der Maßgabe, dass die Gewichtsmengen der Komponenten A, B und C sich zu 100 Gew.-% addieren. In der Regel liegt das Gewicht der Komponenten B und C im Bereich von 10 bis 80 Gew.-%, vorzugsweise 20 bis 70 Gew.-% und insbesondere 30 bis 60 Gew.-%, jeweils bezogen auf das Gesamtgewicht A + B + C.

Je nach gewünschtem Eigenschaftsprofil enthalten die erfindungsgemäßen Zusammensetzungen Komponente B und Komponente C oder ausschließlich Komponente B. Wird eine hohe Beschichtungshärte gewünscht, enthält die erfindungsgemäße Zubereitung vorzugsweise Komponente B und Komponente C. Wird hingegen mehr Wert auf eine hohe Flexibilität gelegt, kann auf Komponente C verzichtet werden. Zudem wird mit zunehmendem Gehalt an Komponente C die Viskosität der erfindungsgemäßen Zubereitungen verbessert. Im ersten Fall liegt das Verhältnis von Komponente B zu Komponente C vorzugsweise im Bereich von 20:1 bis 1:1 und insbesondere im Bereich von 10:1 bis 1,5:1.

In der Regel ist die Komponente A im wesentlichen aus einem oder mehreren aliphatischen Strukturelementen, Urethangruppen und wenigstens zwei ethylenisch ungesättigten Struktureinheiten aufgebaut. Aliphatische Strukturelemente umfassen sowohl Alkylengruppen, vorzugsweise mit 4 bis 10 C-Atomen, als auch Cycloalkylengruppen mit vorzugsweise 6 bis 20 C-Atomen. Sowohl die Alkylenals auch die Cycloalkylengruppen können mit C₁-C₄-Alkyl, insbesondere mit Methyl, ein- oder mehrfach substituiert sein sowie ein oder mehrere nicht benachbarte Sauerstoffatome enthalten. Die aliphatischen Strukturelemente sind gegebenenfalls über quartäre oder tertiäre Kohlenstoffatome, über Harnstoffgruppen, Biureth-, Urethdion-, Allophanat-, Cyanurat-, Urethan-, Ester- oder Amidgruppen oder über Ethersauerstoff oder Aminstickstoff miteinander verbunden. Vorzugsweise ist die Komponente A frei von Urethdion- oder Allophanatgruppen sowie von Aminstickstoff. Ferner weist die Komponente A erfindungsgemäß wenigstens zwei ethylenisch ungesättigte Strukturelemente auf. Hierbei handelt es sich vorzugsweise um Vinyl- oder Allylgruppen, die auch mit C₁-C₄-Alkyl, insbesondere Methyl substituiert sein können, und die sich insbesondere von α,β-ethylenisch ungesättigten Carbonsäuren bzw. deren Amiden ableiten. Besonders bevorzugte ethylenisch ungesättigte Struktureinheiten sind Acryloyl- und Methacryloylgruppen wie Acrylamido und Methacrylamido und insbesondere Acryloxy und Methacryloxy. Besonders bevorzugt weist die Komponente A wenigstens drei ethylenisch ungesättigte Strukturelemente pro Molekül auf.

Ganz besonders bevorzugt sind Komponenten A, in denen die aliphatischen Strukturelemente über Cyanurat-, Biureth- und/oder Urethangruppen miteinander verknüpft sind und die als ethylenisch ungesättigte Strukturelemente Acryloxygruppen aufweisen.

Das zahlenmittlere Molekulargewicht Mₙ der Urethangruppen enthaltenden Prepolymere der Komponente A ist vorzugsweise ≤ 2000 und liegt insbesondere im Bereich von 400 bis 1500. Die Doppelbindungsdichte in derartigen Prepolymeren liegt vorzugsweise oberhalb 1,5 mol/kg Prepolymer und insbesondere im Bereich von 2 bis 6 mol/kg Prepolymer.

Derartige ethylenisch ungesättigte, Urethangruppen enthaltende Prepolymere sind dem Fachmann grundsätzlich bekannt. Bevorzugte, Harnstoffgruppen-freie aliphatische Urethane sind beispielsweise dadurch erhältlich, dass man
i) wenigstens eine aliphatische Verbindung oder ein aliphatisches Prepolymer mit wenigstens zwei und vorzugsweise drei oder 4 Isocyanatgruppen (Komponente a1) mit
ii) wenigstens einer Verbindung, die wenigstens eine reaktive OH-Gruppe und wenigstens eine ethylenisch ungesättigte Doppelbindung aufweist (Komponente a2) und gegebenenfalls
iii)einer oder mehreren aliphatischen Verbindungen mit wenigstens einer reaktiven OH-Gruppe (Komponente a3) umsetzt.

Hierbei ist das Verhältnis der OH-Gruppen aus den Komponenten a2 und a3 zu den NCO-Gruppen aus der Komponente a1 OH/NCO ≥ 1, so daß das erhaltene Prepolymer keine NCO-Gruppen enthält. Die Komponente a2 wird vorzugsweise in einer Menge eingesetzt, dass die darin enthaltenen OH-Gruppen (OHₐ₂) mit den NCO-Gruppen aus Komponente a1 in einem Verhältnis OHₐ₂/NCO im Bereich von 0,4 bis 0,95 und bevorzugt von 0,6 bis 0,9 stehen.

Als Komponente a1 kommen aliphatische Diisocyanate, oligomere Addukte aliphatischer Diisocyanate an polyfunktionelle Alkohole mit vorzugsweise 2 bis 20 C-Atomen, sowie die Urethdione, Isocyanurate, Biurethe und Allophanate aliphatischer Diisocyanate in Frage. Beispiele für geeignete aliphatische Diisocyanate sind Tetramethylendiisocyanat, Hexamethylendiisocyanat, Octamethylendiisocyanat, Decamethylendiisocyanat, Dodecamethylendiisocyanat, Tetradecamethylendiisocyanat, 1,6-Diisocyanato-2,2,4-trimethylhe-xan, 1,6-Diisocyanato-2,2,4,4-tetramethylhexan, 1,2-, 1,3- oder 1,4-Diisocyanatocyclohexan, 4,4'-Di(isocyanatocyclohexyl)methan, 1-Isocyanato-3,3,5-trimethyl-5-(isocyanatomethyl)cyclohexan (= Isophorondiisocyanat) und 2,4- oder 2,6-Diisocyanato-1-methylcyclohexan. Geeignete polyfunktionelle Alkohole umfassen aliphatische Di- oder Polyole mit vorzugsweise 2 bis 20 C-Atomen wie Ethylenglykol, Diethylenglykol, Triethylenglykol, 1,2-Propylenglykol, 1,3-Propylenglykol, Dipropylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, Dimethylolcyclohexan, Glycerin, Trimethylolethan, Trimethylolpropan, Trimethylolbutan, Pentaerythrit, Ditrimethylolpropan, Erythrit und Sorbit. Die Komponente a1 ist vorzugsweise ausgewählt unter den Trimerisierungsprodukten der vorgenannten aliphatischen Diisocyanate, d. h. den Biurethen und den Isocyanuraten, und den Addukten der vorgenannten aliphatischen Diisocyanate an einen der vorgenannten polyfunktionellen aliphatischen Alkohole mit wenigstens drei reaktiven OH-Gruppen. Besonders bevorzugt wird als Komponente a1 das Isocyanurat und/oder das Biureth des Hexamethylendiisocyanats und ganz besonders bevorzugt dessen Isocyanurat eingesetzt.

Als Komponente a2 kommen beispielsweise die Ester ethylenisch ungesättigter Carbonsäuren mit einem der vorgenannten aliphatischen Polyole sowie die Vinyl-, Allyl- und Methallylether der vorgenannten Polyole in Frage, sofern sie noch eine, gegenüber Isocyanat reaktive OH-Gruppe enthalten. Ferner können auch die Amide ethylenisch ungesättigeter Carbonsäuren mit Aminoalkoholen eingesetzt werden. Als Komponente a2 werden die Ester der Acrylsäure und der Methacrylsäure wie 2-Hydroxyethyl(meth)acrylat, Hydroxypropyl(meth)acrylat, 1,4-Butandiolmono(meth)acrylat, Neopentylglykolmono(meth)acrylat, Trimethylolpropanmono(meth)acrylat, Trimethylolpropandi(meth)acrylat, Pentaerythritdi- und -tri(meth)acrylat bevorzugt. Besonders bevorzugt ist die Komponente a2 ausgewählt unter Hydroxypropylacrylat und Butandiolmonoacrylat und ist insbesondere 2-Hydroxyethylacrylat.

Geeignete aliphatische Verbindungen mit wenigstens einer reaktiven OH-Gruppe (Komponente a3) sind beispielsweise Alkanole mit vorzugsweise 1 bis 10 C-Atomen, Cycloalkanole mit vorzugsweise 5 bis 10 C-Atomen, sowie Monoalkylether von Polyalkylenglykolen. Beispiele für geeignete Alkanole sind Methanol, Ethanol, n- und Isopropanol, n-, 2-, iso- und tert.-Butanol, Amylalkohol, Isoamylalkohol, n-Hexanol, n-Octanol, 2-Ethylhexanol und Decanol. Geeignete Cycloalkanole umfassen z. B. Cyclopentanol und Cyclohexanol, die gegebenenfalls ein- oder mehrfach mit C₁-C₄-Alkyl z. B. Methyl, Ethyl, n-Propyl, Isopropyl, n-Butyl, 2-Butyl, Isobutyl oder tert.-Butyl, insbesondere mit Methyl substituiert sind. Beispiele für Monoalkylether von Polyalkylenglykolen sind die Mono-C₁-C₄-alkylether und insbesondere die Methylether des Ethylenglykols, des Diethylenglykols oder des Triethylenglykols.

Die Herstellung der Komponente A erfolgt in bekannter Weise dadurch, dass man die Komponente a1 mit den Komponenten a2 und gegebenenfalls a3 bei Temperaturen vorzugsweise im Bereich von 0 bis 100 °C und insbesondere im Bereich von 20 bis 70 °C zur Reaktion bringt. Vorzugsweise werden zuerst Komponente a1 und a2 zur Reaktion gebracht. Anschließend wird unter Reaktionsbedingungen Komponente a3 zugegeben.

Zur Beschleunigung der Umsetzung können Katalysatoren, wie sie z. B. in Houben-Weyl, Methoden der Organischen Chemie, Bd. XIV/2, Thieme-Verlag, Stuttgart 1963, S. 60f. sowie Ullmanns Enzyklopädie der Technischen Chemie, 4. Aufl., Bd 19 (1981), S. 306 beschrieben sind, eingesetzt werden. Bevorzugt sind zinnhaltige Katalysatoren wie Dibutylzinndilaurat, Zinn(II)octoat oder Dibutylzinndimethoxid. Im Allgemeinen werden solche Katalysatoren in einer Menge von 0,001 bis 2,5 Gew.-%, bevorzugt von 0,005 bis 1,5 Gew.-%, bezogen auf die Gesamtmenge der Reaktanden, eingesetzt.

Zur Stabilisierung der radikalisch polymerisierbaren Verbindungen (Komponente a2) werden vorzugsweise 0,001 bis 2 Gew.-%, insbesondere 0,005 bis 1,0 Gew.-% Polymerisationsinhibitoren der Reaktion zugesetzt. Dabei handelt es sich um die üblichen, zur Behinderung der radikalischen Polymerisation geeigneten Verbindungen, z. B. um Hydrochinone oder Hydrochinonmonoalkylether, 2,6-Di-tert.-butylphenole, wie 2,6-Di-tert.-butylkresol, Nitrosamine, Phenothiazine oder Phosphorigsäureester. Die Umsetzung kann sowohl lösungsmittelfrei als auch unter Zusatz von Lösungsmitteln durchgeführt werden. Als Lösungsmittel kommen inerte Lösungsmittel, z. B. Aceton, Methylethylketon, Tetrahydrofuran, Dichlormethan, Toluol, C₁-C₄-Alkylester der Essigsäure wie Ethylacetat oder Butylacetat in Frage. Bevorzugt wird die Umsetzung lösungsmittelfrei durchgeführt.

Als Komponente B wird wenigstens ein monofunktionelle Ester einer α,β-ethylenisch ungesättigter Carbonsäure mit einem monofunktionellen Alkanol, der ausgewählt ist unter Trimethylolpropanmonoformalacrylat, Glycerinmonoformalacrylat, Cyclohexylmethylacrylat, 4-Tetrahydropyranylacrylat, 2-Tetrahydropyranylmethylacrylat und Tetrahydrofurfurylacrylat eingesetzt. Ganz besonders bevorzugt wird als Komponente B Trimethylolpropanmonoformalacrylat eingesetzt.

Darüber hinaus können die strahlungshärtbaren Zubereitungen in den oben angegebenen Mengen einen di- oder polyfunktionellen Ester einer α,β-ethylenisch ungesättigten Carbonsäure mit einem aliphatischen Di- oder Polyol enthalten (Komponente C). Geeignet sind beispielsweise die Veresterungsprodukte der oben im Zusammenhang mit Komponente a1 aufgeführten Di- oder Polyole. Bevorzugt werden die Ester der Acrylsäure und der Methacrylsäure, insbesondere die Diester von Diolen. Vorzugsweise enthalten die Diole bzw. die Polyole außer den OH-Funktionen keine weiteren Heteroatome. Beispiele für geeignete (Komponenten C) umfassen Ethylengly-koldi(meth)acrylat, Propylenglykoldi(meth)acrylat, Butylengly-koldi(meth)acrylat, 1,6-Hexandioldi(meth)acrylat, Diethylenglykoldi(meth)acrylat, Triethylenglykoldi(meth)acrylat, Dipropylenglykoldi(meth)acrylat, Tripropylenglykoldi(meth)acrylat, 1,4-Cyclohexandioldi(meth)acrylat und 1,4-Bis(hydroxymethyl)cyclohexandi(meth)acrylat, ferner Trimethylolethantri(meth)acrylat, Trimethylolpropantri(meth)acrylat und Pentaerythrittetra(meth)acrylat. Besonders bevorzugte Komponenten C sind Butandioldiacrylat, Hexandioldiacrylat, 1,4-Cyclohexandioldiacrylat und 1,4-Bis(hydroxymethyl)cyclohexandiacrylat. Ganz besonders bevorzugt ist Hexandioldiacrylat.

Ferner können die erfindungsgemäßen, strahlungshärtbaren Zubereitungen je nach Verwendungszweck bis zu 20 Gew.-% übliche Hilfsmittel wie Verdicker, Verlaufshilfsmittel, Entschäumer, UV-Stabilisatoren, Gleitmittel und Füllstoffe enthalten. Geeignete Hilfsmittel sind dem Fachmann hinreichend aus der Lack-Beschichtungs-Technologie bekannt. Geeignete Füllstoffe umfassen Silikate, z. B. durch Hydrolyse von Siliciumtetrachlorid erhältliche Silikate wie Ärosil® der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin®-Marken der Ciba-Spezialitätenchemie) und Benzophenone. Diese können alleine oder zusammen mit geeigneten Radikalfängern, beispielsweise sterisch gehinderten Aminen wie 2,2,6,6-Tetramethylpiperidin, 2,6-Di-tert.-butylpiperidin oder deren Derivate, z. B. Bis-(2,2,6,6-tetramethyl-4-piperidyl)sebacinat eingesetzt werden. Stabilisatoren werden üblicherweise in Mengen von 0,1 bis 5,0 Gew.-% und vorzugsweise 0,5 bis 3,5 Gew.-%, bezogen auf die in der Zubereitung enthaltenen Komponenten A bis C eingesetzt.

Sofern die Aushärtung mittels UV-Strahlung erfolgt, enthalten die erfindungsgemäßen Zubereitungen wenigstens einen Photoinitiator, der die Polymerisation ethylenisch ungesättigter Doppelbindungen initiieren kann. Hierzu zählen Benzophenon und Benzophenonderivate, wie 4-Phenylbenzophenon und 4-Chlorobenzophenon, Michlers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate wie β-Methylanthrachinon und tert.-Butylanthrachinon, Acylphosphinoxide, wie 2,4,6-Trimethylbenzoyldiphenylphosphinoxid, Ethyl-2,4,6-trimethylbenzoylphenylphosphinat und Bisacylphosphinoxide. Die vorgenannten Photoinitiatoren werden, sofern erforderlich, in Mengen von 0,05 bis 20 Gew.-%, vorzugsweise 0,1 bis 10 Gew.-% und insbesondere 0,1 bis 5 Gew.-%, bezogen auf die polymerisierbaren Komponenten A, B und C der erfindungsgemäßen Zubereitungen eingesetzt. Sofern die erfindungsgemäße Zubereitung mittels Elektronenstrahlung gehärtet wird, kann auf Photoinitiatoren verzichtet werden. Bei Anwendung der Elektronenstrahlhärtung können die erfindungsgemäßen zubereitungen auch farbige Pigmente enthalten.

Vorzugsweise enthalten die erfindungsgemäßen Zubereitungen keine Pigmente oder Füllstoffe. Ferner sind die erfindungsgemäßen Zubereitungen vorzugsweise frei von nicht-polymerisierbaren inerten Lösungsmitteln.

Die Herstellung der erfindungsgemäßen Zubereitungen erfolgt durch Abmischen der Komponenten in bekannter Weise. Das Abmischen kann bei Raumtemperatur oder erhöhter Temperatur bis 100 °C, beispielsweise mittels üblichen Mischvorrichtungen wie Rührkesseln oder statischen Mischern erfolgen.

Die erfindungsgemäßen Zubereitungen erweisen sich besonders geeignet zum Beschichten von Substraten wie Holz, Papier, Kunststoffoberflächen, mineralischen Baustoffen wie Zement-Formsteine und Faserzementplatten, und insbesondere für Metalle oder beschichtete Metalle.

Demnach betrifft die vorliegende Erfindung auch ein Verfahren zum Beschichten von Substraten, insbesondere von Metallen oder beschichteten Metallen, sowie die durch dieses Verfahren erhältlichen beschichteten Substrate. Die Beschichtung der Substrate erfolgt in der Regel dadurch, dass man wenigstens eine erfindungsgemäße, strahlungshärtbare Zubereitung auf das zu beschichtende Substrat in der gewünschten Stärke aufbringt, gegebenenfalls vorhandenes Lösungsmittel entfernt und anschließend durch Einwirkung energiereicher Strahlung wie UV-Strahlung oder Elektronenstrahlung aushärtet. Dieser Vorgang kann, sofern gewünscht, ein- oder mehrfach wiederholt werden. Das Aufbringen der strahlungshärtbaren Zubereitungen auf das Substrat erfolgt in bekannter Weise, z. B. durch Spritzen, Spachteln, Rakeln, Bürsten, Rollen oder Gießen. Die Beschichtungsstärke liegt in der Regel im Bereich von 3 bis 500 g/m² und vorzugsweise 10 bis 200 g/m² entsprechend Nassfilmdicken von etwa 3 bis 500 µm, vorzugsweise 10 bis 200 µm. Das Aufbringen kann sowohl bei Raumtemperatur als auch bei erhöhter Temperatur, vorzugsweise jedoch nicht oberhalb 100 °C erfolgen. Anschließend werden die Beschichtungen durch Einwirkung der energiereichen Strahlung, vorzugsweise UV-Strahlung der Wellenlänge 250 bis 400 nm oder durch Bestrahlung mit energiereichen Elektronen (Elektronenstrahlung; 150 bis 300 keV) gehärtet. Als UV-Quellen dienen beispielsweise Hochdruckquecksilberdampflampen, z. B. CK- oder CK1-Strahler der Fa. IST. Die üblicherweise zur Vernetzung ausreichende Strahlungsdosis liegt im Bereich von 80 bis 3000 mJ/cm².

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Die erfindungsgemäßen Zubereitungen zeichnen sich durch eine niedrige Viskosität, vorzugsweise ≤ 10 Pas (bestimmt bei 23 °C mittels eines ICI Kegel-Platte Viskosimeters) und eine hohe Reaktivität, gekennzeichnet durch einen Wert ≥ 10 m/min aus (die Reaktivität in m/min entspricht der Geschwindigkeit, mit der ein mit einer strahlungshärtbaren Zubereitung in einer Nassfilmstärke von 100 µm behandeltes Substrat an einer UV-Quelle mit einer Leistung von 120 W/cm in einem Abstand von 10 cm vorbeigeführt werden kann, so dass noch vollständige Aushärtung stattfindet). Gleichzeitig können hohe Härten, charakterisiert durch eine Pendeldämpfung (analog DIN 53157, s.u.) ≥ 80 sec. und hohe Flexibilitäten, charakterisiert durch Erichsen-Tiefungen ≥ 5 mm (s.u.) realisiert werden, ohne dass Abstriche in der Viskosität und der Reaktivität zu verzeichnen sind. Zudem zeichnen sich die aus den erfindungsgemäßen Zubereitungen erhältlichen Beschichtungen durch eine erhöhte Witterungsbeständigkeit aus, wie sie beispielsweise durch Sun-Test-Versuche bestimmt werden kann.

Die im folgenden angegebenen Beispiele sollen die vorliegende Erfindung erläutern, ohne sie jedoch einzuschränken.

### Beispiele

### I Herstellung der erfindungsgemäßen Zubereitung

### 1. Beispiele 1 bis 10

In einem Rührkessel wurden 1000 Teile¹⁾ Cyanurat des Hexamethylendiisocycanats, 1,44 Teile 2,6-Di-tert.-butyl-4-methylphenol und 0,72 Teile Hydrochinonmonomethylether vorgelegt. Man erwärmte auf 50 °C, gab 0,3 Teile Dibutylzinndilaurat zu und ließ anschließend bei einer Temperatur von 50 bis 60 °C x Teile Hydroxyethylacrylat (HEA, s. Tabelle 1) zutropfen. Anschließend erwärmte man auf 70 °C und behielt diese Temperatur drei Stunden bei. Danach gab man unter Beibehaltung der Temperatur y Teile Methanol (MeOH, s. Tabelle 1) zu und behielt die Temperatur weitere 2 Stunden bei bis der NCO-Wert auf 0,05 % abgefallen war. Anschließend ließ man abkühlen und füllte das farblose Produkt bei 60 °C ab.
1) Alle Mengenangaben (Teile) sind hier und im folgenden als Gewichtsteile zu verstehen.

Anschließend wurden die so erhaltenen Urethanacrylate in den in Tabelle 1 angegbenen Mengen mit Trimethylolpropanmonoformalacrylat (TMPMFA), gegebenenfalls 1,6-Hexandioldiacrylat und 4 Gew.-% Photoinitiator (2-Hydroxy-2-methyl-1-phenylpropan-1-on = Darocure® 1173 der Fa. Ciba-Spezialitätenchemie), bezogen auf das Gesamtgewicht der Komponenten A bis C abgemischt. In Tabelle 1 sind die für die Zubereitungen der Beispiele 1 bis 10 gefundenen Viskositätswerte und die Reaktivitäten angegeben.

**Tabelle 1**

| | Urethan-Prepolymer | | | HDDA | TMPMFA | Viskosität³⁾ | Reaktivität⁴⁾ |
|---|---|---|---|---|---|---|---|
| Bsp. | x HEA¹ | y MeOH¹ | [Gew.%]² | [Gew.%]² | [Gew.%]² | [Pas] | m/min |
| 1 | 362 | 76,3 | 70 | 0 | 30 | 9,9 | 20 |
| 2 | 453 | 50,8 | 62,5 | 0 | 37,5 | 6,0 | 20 |
| 3 | 453 | 50,8 | 60 | 5 | 35 | 2,6 | 20 |
| 4 | 453 | 50,8 | 60 | 6 | 34 | 2,5 | 20 |
| 5 | 453 | 50,8 | 60 | 0 | 40 | 3,1 | 20 |
| 6 | 513 | 33,9 | 61,4 | 0 | 38,6 | 3,8 | 20 |
| 7 | 513 | 33,9 | 60 | 5 | 35 | 4,0 | 20 |
| 8 | 513 | 33,9 | 60 | 6 | 34 | 4,0 | 25 |
| 9 | 513 | 33,9 | 60 | 0 | 40 | 6,0 | 25 |
| 10 | 453 | 50,8 | 40 | 20 | 40 | 0,33 | 20 |

| | | | | | | | |
|---|---|---|---|---|---|---|---|
| 1) Gew.-Teile Hydroxyethylacrylat (HEA) bzw. Methanol bei 1000 Gewichtsteilen Cyanurat des Hexamethylendiisocyanats | | | | | | | |
| 2) Gew.-% der Komponenten A bis C in der strahlungshärtbaren Zubereitung | | | | | | | |
| 3) bestimmt bei 23 °C mittels eines ICI Kegel-Platte Viskosimeters | | | | | | | |
| 4) bestimmt an Beschichtungen mit einer Nassfilmdicke von 100 µm auf Glas in der oben beschriebenen Weise | | | | | | | |

### Beispiele 11 bis 14, Vergleichsbeispiele V1 und V2

Analog den Beispielen 1 bis 10 wurde ein Urethanacrylat aus 1000 Gewichtsteilen Isocyanurat des Hexamethylendiisocyanats, 453 Teilen Hydroxyethylacrylat und 50,8 Teilen Methanol hergestellt. 70 Teile des so hergestellten Urethanacrylats wurden dann mit jeweils 30 Teilen des in Tabelle 2 angegebenen Monoacrylats (Komponente B) und 4 Teilen Photoinitiator Darocure® 1173 abgemischt.

Die Viskosität und die Reaktivität der so erhaltenen Zubereitungen sind in Tabelle 2 angegeben.

**Tabelle 2**

| Beispiele 11 bis 15, Vergleichsbeispiele V1, V2 | | | |
|---|---|---|---|
| Beispiel | Komponente B | Viskosität [Pas] | Reaktivität [m/min] |
| 11 | Glycerinmonoformalacrylat | 4,6 | 15 |
| 12 | Tetrahydrofurfurylacrylat | 1,8 | 15 |
| 13 | Tetrahydropyran-4-ylacrylat | 3,6 | 15 |
| 14 | Cyclohexylmethylacrylat | 2,8 | 15 |
| 15 | Tetrahydropyranyl-2-methylacrylat | 3,6 | 15 |
| V1 | Tripropylenglykolmonomethyletheracrylat | 3,6 | 20 |
| V2 | Dipropylenglykolmonomethyletheracrylat | 2,4 | 30 |

### II. Bestimmung der mechanischen Eigenschaften der ausgehärteten Beschichtungen aus den Beispielen 1 bis 14 sowie den Vergleichsbeispielen V1 und V2

### 1. Beschichtungshärte

Die Charakterisierung der Beschichtungshärte erfolgte durch Bestimmung der Pendeldämpfung analog DIN 53157. Hierzu wurden die strahlungshärtbaren Zusammensetzungen der Beispiele und der Vergleichsbeispiele mit einer Nassfilmdicke von 100 µm auf Glas aufgebracht. Die so erhaltene Probe wurde zur Aushärtung mit einer Bandgeschwindigkeit von 10 m/min in einem Abstand von 10 cm an einen Quecksilberdampf-Hochdruckstrahler (120 W/cm) zweimal vorbeigeführt. Anschließend wurde die Pendeldämpfung mit einem Pendelgerät nach DIN 53157 (König) bestimmt. Die Angabe erfolgt in Sekunden. Die Ergebnisse sind in Tabelle 3 zusammengefaßt.

### 2. Flexibilität

Die Bestimmung der Flexibilität der Beschichtung erfolgte durch Ermittlung der Erichsen-Tiefung analog DIN 53156. Hierzu wurde mittels eines Spiralrakels die jeweilige Zubereitung in einer Nassfilmdicke von 50 µm auf BONDER-Blech 132 aufgebracht. Zur Aushärtung wurde in der oben beschriebenen Weise mit einem Quecksilberdampf-Hochdruckstrahler (120 W/cm) belichtet. Anschließend wurde die Erichsen-Tiefung durch Eindrücken einer Metallkugel in die nicht beschichtete Seite des Blechs (DIN 53156) bestimmt. Die Ergebnisse sind in Tabelle 3 zusammengefaßt.

**Tabelle 3**

| Beispiel | Pendeldämpfung [sec] | Erichsen-Tiefung [mm] |
|---|---|---|
| 1 | 80 | 7,0 |
| 2 | 98 | 6,5 |
| 3 | 86 | 6,8 |
| 4 | 89 | 6,6 |
| 5 | 88 | 6,9 |
| 6 | 85 | 5,7 |
| 7 | 102 | 5,3 |
| 8 | 122 | 5,7 |
| 9 | 130 | 5,5 |
| 10 | 105 | 5,5 |
| 11 | 120 | 6,3 |
| 12 | 90 | 6,6 |
| 13 | 130 | 5,8 |
| 14 | 110 | 6,0 |
| 15 | 80 | 6,3 |
| V1 | 21 | 7,0 |
| V2 | 25 | 7,0 |

### III.Bestimmung der Witterungsstabilität der erfindungsgemäßen Beschichtungen

Als Testsysteme dienten Zubereitungen aus 70 Gewichtsteilen des Urethanacrylats aus Beispiel 2, 30 Teilen Reaktivverdünner gemäß Tabelle 4 und Photoinitiator Darocure® 1173 (Beispiel 16, Vergleichsbeispiele V3 und V4). Die Zubereitungen wurden anschließend mit einer Nassfilmstärke von 100 µm mittels eines Kastenrakels auf eine Glasplatte aufgebracht, in der für die Pendelhärtung beschriebenen Weise durch UV-Strahlung gehärtet und anschließend in einer Bestrahlungsapparatur Heräus-Sun-Test CPS+ mit einer Leistung von 750 W/m² bei einer Temperatur von 37 °C bestrahlt. Nach verschiedenen Zeiten wurde die Vergilbung als b-Werte des L*a*b-Systems (ermittelt mit einem Minolta Remissions-Farbmetrik-Messgerät) sowie der Glanzgrad nach DIN 67530 unter 60° Messgeometrie aufgenommen. Die b-Werte sind in Tabelle 4 für verschiedene Zeitpunkte zusammengefaßt. Die Glanzwerte aller Formulierungen lagen im Bereich von 170 bis 178 und blieben während der 1000-stündigen Belastungszeit auf annähernd gleichem Niveau.

**Tabelle 4**

| Beispiel | Reaktivverdünner | b-Werte | | | |
|---|---|---|---|---|---|
| | | 0 h | 160 h | 700 h | 1000 h |
| V3 | HDDA¹⁾ | 0,45 | 0,7 | 0,7 | 0,82 |
| 16 | TMPMFA²⁾ | 0,29 | 0,47 | 0,5 | 0,55 |
| V4 | LR8945³⁾ | 0,3 | 1,79 | 3,0 | 3,6 |

| | | | | | |
|---|---|---|---|---|---|
| 1) 1,6-Hexandioldiacrylat | | | | | |
| 2) Trimethylolpropanmonoformalacrylat | | | | | |
| 3) Laromer® LR8945 der BASF; mit Bisphenol-A-Einheiten modifiziertes Polyetheracrylat | | | | | |

Die Zunahme der b-Werte entspricht einer zunehmenden Vergilbung. Die Zunahme der Vergilbung ist am wenigsten ausgeprägt für die erfindungsgemäße Zubereitung des Beispiels 16.

Ferner wurde die thermische Belastbarkeit der Zubereitungen aus Beispiel 16 sowie den Vergleichsbeispielen V3 und V4 durch Bestimmung des b-Werts nach Temperung bei 100 °C für 24 Stunden ermittelt. Parallel hierzu wurde eine Zubereitung untersucht, bei der das HDDA aus Beispiel V3 gegen N-Vinylcaprolactam ausgetauscht worden war (Vergleichsbeispiel V5). Für Beispiel 15 sowie die Vergleichsbeispiele V3 und V4 wurde keine nennenswerte Zunahme des b-Werts beobachtet. Hingegen nimmt der b-Wert für die Probe aus V5 dramatisch zu, was einer deutlichen Vergilbung bei thermischer Belastung entspricht.

## Patentansprüche

1. Strahlungshärtbare Zubereitung, enthaltend
i) wenigstens ein aliphatisches, Urethangruppen enthaltendes Prepolymer, das im Mittel wenigstens zwei ethylenisch ungesättigte Doppelbindungen pro Molekül aufweist (= Komponente A),
ii) wenigstens einen monofunktionellen Ester einer α,β-ethylenisch ungesättigten Carbonsäure mit einem monofunktionellen Alkanol, der ausgewählt ist unter Trimethylolpropanmonoformalacrylat, Glycerinmonoformalacrylat, Cyclohexylmethacrylat, 4-Tetrahydropyranylacrylat, 2-Tetrahydropyranylmethacrylat und Tetrahydrofurfurylacrylat (= Komponente B),
iii) gegebenenfalls einen di- oder polyfunktionellen Ester einer α,β-ethylenisch ungesättigten Carbonsäure mit einem aliphatischen Di- oder Polyol (= Komponente C).

2. Strahlungshärtbare Zubereitung nach Anspruch 1, worin die Komponente C ausgewählt ist unter den Diacrylaten und Dimethacrylaten aliphatischer Diole.

3. Strahlungshärtbare Zubereitung nach Anspruch 2, worin die Komponente C ausgewählt ist unter 1,6-Hexandioldiacrylat und/oder 1,4-Butandioldiacrylat.

4. Strahlungshärtbare Zubereitung nach einem der vorhergehenden Ansprüche, worin die ethylenisch ungesättigten Doppelbindungen des aliphatischen, Urethangruppen enthaltenden Prepolymers in Form von Acrylat- und/oder Methacrylatgruppen vorliegen.

5. Strahlungshärtbare Zubereitung nach einem der vorhergehenden Ansprüche, worin das aliphatische, Urethangruppen enthaltende Prepolymer erhältlich ist durch Umsetzung von
i) wenigstens einer aliphatischen Verbindung oder einem aliphatischen Prepolymer mit wenigstens zwei Isocyanatgruppen (Komponente a1),
ii) wenigstens einer Verbindung, die wenigstens eine reaktive OH-Gruppe und wenigstens eine ethylenisch ungesättigte Doppelbindung aufweist (Komponente a2) und gegebenenfalls
iii) einer oder mehreren aliphatischen Verbindungen mit wenigstens einer reaktiven OH-Gruppe (Komponente a3).

6. Strahlungshärtbare Zubereitung nach Anspruch 5, wobei die Komponente a1 ausgewählt ist unter den Biurethen und den Isocyanuraten aliphatischer Diisocyanate sowie den Addukten aliphatischer Diisocyanate an polyfunktionelle, aliphatische Alkohole mit wenigstens 3 reaktiven OH-Gruppen.

7. Strahlungshärtbare Zubereitung nach Anspruch 5 oder 6, wobei die Komponente a2 ausgewählt ist unter den Estern der Acrylsäure und/oder der Methacrylsäure mit wenigstens einem aliphatischen Di- oder Polyol, die noch wenigstens eine freie OH-Gruppe aufweist.

8. Strahlungshärtbare Zubereitung nach einem der Ansprüche 5 bis 7, wobei die Komponente a3 ein monofunktionelles Alkanol mit 1 bis 10 Kohlenstoffatomen ist.

9. Verwendung der strahlungshärtbaren Zubereitung nach einem der vorhergehenden Ansprüche zum Beschichten von Substraten.

10. Verwendung nach Anspruch 9 zum Beschichten von Metallen oder beschichteten Metallen.

11. Verfahren zum Beschichten von Substraten, **dadurch gekennzeichnet, dass** man eine strahlungshärtbare Zubereitung nach einem der Ansprüche 1 bis 8 auf das zu beschichtende Substrat aufbringt, gegebenenfalls vorhandenes Lösungsmittel entfernt und anschließend durch Bestrahlung mit UV- oder Elektronenstrahlung aushärtet.

12. Beschichtetes Substrat, erhältlich durch ein Verfahren nach Anspruch 11.

## Claims

1. A radiation-curable formulation comprising
i) at least one aliphatic, urethane-functional prepolymer which on average has at least two ethylenically unsaturated double bonds per molecule (= component A),
ii) at least one monofunctional ester of an a ,b-ethylenically unsaturated carboxylic acid with a monofunctional alkanol which is selected from trimethylolpropane monoformal acrylate, glycerol monoformal acrylate, cyclohexyl methacrylate, 4-tetrahydropyranyl acrylate, 2-tetrahydropyranyl methacrylate and tetrahydrofurfuryl acrylate (= component B),
iii) if desired, di- or polyfunctional esters of an a ,b-ethylenically unsaturated carboxylic acid with an aliphatic di- or polyol (= component C).

2. A formulation as claimed in claim 1, in which component C is selected from the diacrylates and dimethacrylates of aliphatic diols.

3. A formulation as claimed in claim 2, in which component C is selected from 1,6-hexanediol diacrylate and/or 1,4-butanediol diacrylate.

4. A formulation as claimed in any of the preceding claims, in which the ethylenically unsaturated double bonds of the aliphatic, urethane-functional prepolymer are in the form of acrylate and/or methacrylate groups.

5. A formulation as claimed in any of the preceding claims, in which the aliphatic, urethane-functional prepolymer is obtainable by reacting
i) at least one aliphatic compound or one aliphatic prepolymer having at least two isocyanate groups (component a1),
ii) at least one compound which has at least one reactive OH group and at least one ethylenically unsaturated double bond (component a2) and, if desired,
iii) one or more aliphatic compounds having at least one reactive OH group (component a3).

6. A formulation as claimed in claim 5, where component a1 is selected from the biurets and the isocyanurates of aliphatic diisocyanates and from the adducts of aliphatic diisocyanates with polyfunctional, aliphatic alcohols having at least 3 reactive OH groups.

7. A formulation as claimed in claim 5 or 6, where component a2 is selected from the esters of acrylic acid and/or methacrylic acid with at least one aliphatic di- or polyol, which still has at least one free OH group.

8. A formulation as claimed in any of claims 5 to 7, where component a3 is a monofunctional alkanol having 1 to 10 carbons.

9. The use of a formulation as claimed in any of the preceding claims for coating substrates.

10. The use as claimed in claim 9, for coating metals or coated metals.

11. A method of coating substrates, which comprises applying a formulation as claimed in any of claims 1 to 8 to the substrate which is to be coated, removing any solvent and then curing the coating by radiation with UV radiation or electron beams.

12. A coated substrate obtainable by a method as claimed in claim 11.

## Revendications

1. Composition durcissable par rayonnement, contenant
i) au moins un prépolymère aliphatique qui contient des groupes uréthanne et présente en moyenne au moins deux doubles liaisons éthyléniquement insaturées par molécule (= composant A),
ii) au moins un ester monofonctionnel d'un acide carboxylique α,β-éthyléniquement insaturé avec un alcanol monofonctionnel qui est choisi parmi du monoformalacrylate de triméthylolpropane, du monoformalacrylate de glycérine, du méthacrylate de cyclohexyle, de l'acrylate de 4-tétrahydropyrannyle, du méthacrylate de 2-tétrahydropyrannyle et de l'acrylate de tétrahydrofurfuryle (= composant B),
iii) éventuellement un ester difonctionnel ou polyfonctionnel d'un acide carboxylique α,β-éthyléniquement insaturé avec un diol ou polyol aliphatique (= composant C).

2. Composition durcissable par rayonnement suivant la revendication 1, dans laquelle le composant C est choisi parmi les diacrylates et diméthacrylates de diols aliphatiques.

3. Composition durcissable par rayonnement suivant la revendication 2, dans laquelle le composant C est choisi parmi du diacrylate de 1,6-hexanediol et/ou du diacrylate de 1,4-butanediol.

4. Composition durcissable par rayonnement suivant l'une des revendications précédentes, dans laquelle les doubles liaisons éthyléniquement insaturées du prépolymère aliphatique contenant des groupes uréthanne se présentent sous la forme de groupes acrylate et/ou méthacrylate.

5. Composition durcissable par rayonnement suivant l'une des revendications précédentes, dans laquelle le prépolymère aliphatique contenant des groupes uréthanne peut être obtenu par réaction
i) d'au moins un composé aliphatique ou d'un prépolymère aliphatique avec au moins deux groupes isocyanate (composant a1),
ii) d'au moins un composé qui présente au moins un groupe OH réactif et au moins une double liaison éthyléniquement insaturée (composant a2), et éventuellement
iii) d'un ou plusieurs composés aliphatiques comportant au moins un groupe OH réactif (composant a3).

6. Composition durcissable par rayonnement suivant la revendication 5, dans laquelle le composant a1 est choisi parmi les biurets et les isocyanurates de diisocyanates aliphatiques ainsi que les produits d'addition de diisocyanates aliphatiques sur des alcools aliphatiques, polyfonctionnels, comportant au moins trois groupes OH réactifs.

7. Composition durcissable par rayonnement suivant la revendication 5 ou 6, dans laquelle le composant a2 est choisi parmi les esters de l'acide acrylique et/ou de l'acide méthacrylique avec au moins un diol ou polyol aliphatique qui présente encore au moins un groupe OH libre.

8. Composition durcissable par rayonnement suivant l'une des revendications 5 à 7, dans laquelle le composant a3 est un alcanol monofonctionnel comportant 1 à 10 atomes de carbone.

9. Utilisation de la composition durcissable par rayonnement suivant l'une des revendications précédentes, pour revêtir des substrats.

10. Utilisation suivant la revendication 9, pour revêtir des métaux ou des métaux enduits.

11. Procédé de revêtement de substrats, **caractérisé en ce qu'**on applique une composition durcissable par rayonnement suivant l'une des revendications 1 à 8 sur le substrat à revêtir, on élimine éventuellement du solvant présent et ensuite on la durcit par irradiation par un rayonnement U.V. ou électronique.

12. Substrat revêtu, que l'on peut obtenir par un procédé suivant la revendication 11.
